# EUROPEAN PATENT SPECIFICATION

(11) **EP 4 498 314 B1**
(45) Date of publication and mention of the grant of the patent: **26.08.2026**
(21) Application number: 24188878.3
(22) Date of filing: 16.07.2024
(51) Int. Cl.: G06T 15/50

(54) **METHODS AND SYSTEMS FOR LIGHT PROBE GENERATION**
VERFAHREN UND SYSTEME ZUR LICHTSONDENERZEUGUNG
PROCÉDÉS ET SYSTÈMES DE GÉNÉRATION DE SONDE DE LUMIÈRE

(30) Priority: 27.07.2023 GB 202311549
(43) Date of publication of application: 29.01.2025
(73) Proprietor: Sony Interactive Entertainment Inc., Tokyo 108-0075 (JP)
(72) Inventor: LEUNG, Jun Yen, London, W1F 7LP (GB); CERRATO, Maurizio, London, W1F 7LP (GB); GREEN, Lawrence, London, W1F 7LP (GB)
(74) Representative: D Young & Co LLP

(56) References cited:
- RODRIGUEZ SIMON ET AL: "Glossy probe reprojection for interactive global illumination", ACM TRANSACTIONS ON GRAPHICS, ACM, NY, US, vol. 39, no. 6, 26 November 2020 (2020-11-26), pages 1 - 16, XP058995614, ISSN: 0730-0301, DOI: 10.1145/3414685.3417823
- ANONYMOUS: "lighting - How is a light probe different than an environmental cube map? - Computer Graphics Stack Exchange", 14 August 2015 (2015-08-14), XP093226258, Retrieved from the Internet <URL:https://computergraphics.stackexchange.com/questions/233/how-is-a-light-probe-different-than-an-environmental-cube-map>
- ANONYMOUS: "Fast *Dynamic* Cubic Environment Map - OpenGL / OpenGL: Advanced Coding - Khronos Forums", 1 May 2001 (2001-05-01), XP093226264, Retrieved from the Internet <URL:https://community.khronos.org/t/fast-dynamic-cubic-environment-map/34920/11>
- CHAJDAS M G ET AL: "Assisted Environment Map Probe Placement", 1 January 2011 (2011-01-01), XP093226620, Retrieved from the Internet <URL:https://www.anteru.net/wp-content/uploads/2011/11/aepp.pdf>

## Description

### BACKGROUND OF THE INVENTION

### Field of the invention

The present invention relates to a method and system for generating a light probe in a virtual environment.

### Description of the Prior Art

Developers of content (such as video games) continuously strive to provide yet more realistic virtual environments. The quality of lighting effects often plays a key role in the perception of such environments by users and how realistic they appear to users.

Light probes can provide an effective way to obtain realistic lighting effects in virtual environments. However, the process of generating light probes is often complex and computationally expensive. This computational cost further increases with increasing light probe quality. A virtual environment typically comprises a large number of light probes distributed throughout the environment - thus, the computational cost of generating high quality light probes for the environment can be excessively high and may require the use of computationally expensive and specialised hardware.

The present invention seeks to mitigate or alleviate these problems, and to provide more efficient light probe generation.

Previously proposed arrangements are disclosed in RODRIGUEZ SIMON ET AL: "Glossy probe reprojection for interactive global illumination", 26 November 2020, ACM Transaction on Graphics, vol. 39, no. 6, DOI : 10.1145/3414685.3417823.

### SUMMARY OF THE INVENTION

Various aspects and features of the present invention are defined in the appended claims and within the text of the accompanying description and include at least:
- In a first aspect, a method of generating a light probe in a virtual environment is provided in accordance with claim 1.
- In another aspect, a system for generating a light probe in a virtual environment is provided in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 schematically illustrates an entertainment device;
- Figure 2 is a schematic flowchart illustrating a method of generating a light probe;
- Figure 3 schematically illustrates a light probe; and
- Figure 4 schematically illustrates a system for generating a light probe.

### DESCRIPTION OF THE EMBODIMENTS

A method and system for generating a light probe in a virtual environment are disclosed. In the following description, a number of specific details are presented in order to provide a thorough understanding of the embodiments of the present invention. It will be apparent, however, to a person skilled in the art that these specific details need not be employed to practice the present invention.

Conversely, specific details known to the person skilled in the art are omitted for the purposes of clarity where appropriate.

In an example embodiment of the present invention, a suitable system and/or platform for implementing the methods and techniques herein may be an entertainment device such as the Sony^{®} PlayStation 5^{®} videogame console.

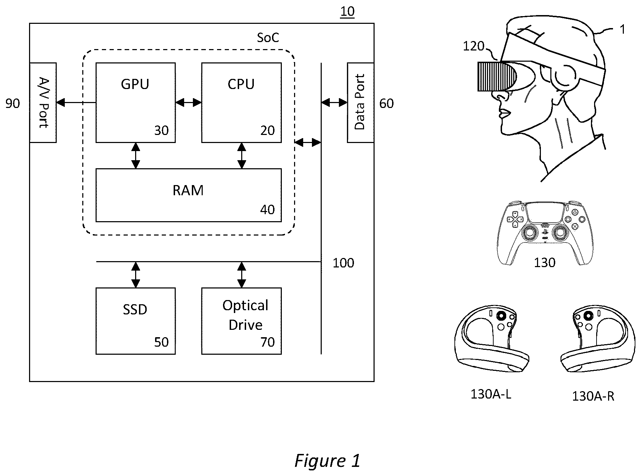

Referring now to the drawings, wherein like reference numerals designate identical or corresponding parts, Figure 1 shows an example of an entertainment device 10 which is a computer or console such as the Sony^{®} PlayStation 5^{®} (PS5).

The entertainment device 10 comprises a central processor 20. This may be a single or multi core processor, for example comprising eight cores as in the PS5. The entertainment device also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is a head mounted display 'HMD' 120, such as the PlayStation VR 2 'PSVR2', worn by a user 1. It will be appreciated that the content may be displayed using various other devices - e.g. using a conventional television display connected to A/V ports 90.

Where components are not integrated, they may be connected as appropriate either by a dedicated data link or via a bus 100.

Interaction with the system is typically provided using one or more handheld controllers 130, 130A, such as the DualSense^{®} controller 130 in the case of the PS5, and/or one or more VR controllers 130A-L,R in the case of the HMD. The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

Operating under suitable software instruction, the entertainment device or equivalent development kit, computer or server, may then implement a method of generating a light probe in a virtual environment as described herein.

It will be appreciated that a typical virtual environment, which may be for use in content such as a video game, or as a TV or movie set, may comprise ambient light (for example generated by a so-called sky box) and/or directional light (typically from in-environment light sources).

However a further form of lighting comes from global illumination ('GI'), which accounts for secondary light sources such as bounced or reflective light, or optionally emissive light from textured objects. Similarly reflection can redirect light toward other surfaces and toward the virtual camera.

The calculation of such secondary light can be performed using global illumination probes ('GI probes') and optionally also reflection probes, which collectively may be more generally referred to as light probes.

The lighting interaction is typically with static components within the scene, although not necessarily so.

In a typical example, a red cube on a white surface will result in a pink/red tint to the white surface around the cube due to GI. Meanwhile depending on the surface properties of the cube, the surface, or another object, a sharp or diffuse reflection may be seen on the surface of one or more of them.

Light probes provide a way to capture information about light passing through empty space in the virtual environment (e.g. in a space between buildings). This information may be stored in the light probe for use at runtime to render content (e.g. a video game). For example, several light probes may be placed throughout a virtual environment, and the light probes may be used to provide lighting effects on moving objects (e.g. a car in between the buildings) in the virtual environment - e.g. lighting effects on a moving object may be approximated by interpolating between light probes adjacent to the object.

As noted above, the process of generating light probes and calculating global illumination, and optionally reflection, can be computationally intensive. This computational cost can be reduced by reducing light probe quality - however, lighting effects often play a key role in providing a realistic virtual environment for the user and such reductions in quality are typically noticeable by the user and reduce the immersiveness of the content.

Embodiments of the present disclosure seek to address or mitigate this issue and to provide a method for more efficiently generating light probes while not sacrificing the quality of lighting effects.

One or more embodiments of the present disclosure relate to methods and systems for generating a light probe in a virtual environment. This includes determining a first region of the light probe (e.g. a region of a face of the probe) based on predetermined condition(s) (e.g. based on the brightness of objects facing different regions of the probe, where the first region may be selected as the region facing a bright object, such as the Sun), collecting light information relating to light passing through a location of the light probe in the virtual environment, and storing the light information in the light probe, where the light information is stored at a higher (e.g. x2, or x4 higher) resolution in the first region of the light probe than in a, different, second region of the light probe (e.g. the remainder of the face of the probe comprising the first region).

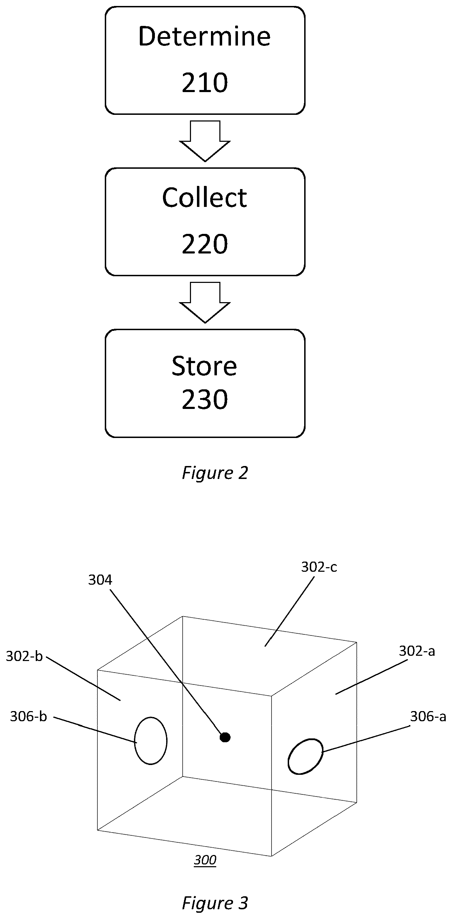

In this way, the region(s) of the light probe that are most important (i.e. salient) for lighting objects in the virtual environment at runtime can be determined, and light information can be stored at a higher resolution for those region(s). This allows improving the balance between the computational cost of generating (i.e. constructing) the light probe and the quality of the lighting effect provided by the light probe at runtime - in other words, more efficiently achieving good quality lighting effects. Figure 2 shows an example of a method of generating a light probe in a virtual environment in accordance with one or more embodiments of the present disclosure.

A step 210 comprises determining a first region of the light probe based on one or more predetermined conditions.

For the purposes of explanation, Figure 3 schematically illustrates a non-limiting example of a light probe 300. The light probe 300 comprises faces 302 (e.g. faces 302-a, 302-b, 302-c), and a centre 304. The faces 302 represent the environment as viewed from the centre 304 of the probe. Each face 302 is divided into a grid of pixels (not shown).

Each pixel on the faces of the light probe (i.e. each pixel of the light probe) may be considered an 'output' viewing direction from the centre 304 of the probe. In other words, each pixel of the light probe may be considered as an individual light source for use in rendering the content at runtime. During rendering of the content, shading (e.g. pixel shading) of the virtual environment may comprise sampling from the faces 302 of the light probe 300 to determine the GI affecting objects in the virtual environment in the vicinity of the light probe 300, thus allowing determining lighting effects for objects in the environment.

It will be appreciated that the faces 302 of the probe may represent textures. Thus, the "pixels" on the faces may be considered "texels" and these two expressions are used interchangeably below, unless indicated otherwise.

It will also be appreciated that the term "resolution" as used herein preferably relates to the number of probe pixels/texels per unit of surface area of a face of a probe. The resolution in a given region of a light probe (e.g. on a face of the probe) may be the same in all (e.g. vertical and horizontal) directions or differ in different directions (e.g. it may be greater in the vertical direction than in the horizontal direction).

In the example shown in Figure 3, the light probe 300 is shaped as a cube with six faces 302 - however, it will be appreciated that the light probe may have other shapes such as a spherical shape.

At step 210, the light probe 300 is divided into two or more regions, including at least a first region (for which light information is stored at a higher resolution) and a second region (for which light information is stored at a lower resolution). The first and second regions each comprise one or more probe pixels. The first region and the second region may comprise different regions of a face of the light probe - e.g. the first region may comprise region 306-a and/or 306-b, and the second region may comprise the remaining part of face 302-a and/or 302-b. Alternatively, the first and second regions may comprise different faces of the light probe - e.g. the first region may comprise face 302-a, and the second region may comprise faces 302-b and/or 302-c.

The first region of the light probe (i.e. how the probe is divided into regions) is determined based on one or more predetermined conditions. The predetermined condition(s) may be selected to identify the region(s) of the light probe that are most important (i.e. salient) for lighting objects in the virtual environment during runtime rendering of the content. The predetermined conditions(s) are evaluated dynamically when generating the light probe - this provides an automated way of identifying first (i.e. salient) regions of the light probe, without requiring the developer to manually select these ahead of time.

As described above, the pixels on the faces of the light probe represent 'output' viewing directions from the centre of the light probe. The importance (for later lighting objects in the content) of light passing through the location of the probe may vary between directions of light - e.g. incoming light may come from specific directions, with other directions of less relevance to lighting. Thus, as described in further detail in relation to step 230, storing light information at higher resolution in certain regions of the probe allows prioritizing the corresponding directions in generating the light probe. In other words, the present approach allows using dynamically determined important directions as criteria for locally increasing light probe resolution. This can allow storing higher resolution lighting information for directions that are more likely to be noticeable to the user. Storing light information in this way can allow more efficiently using computing resources to obtain high quality lighting at runtime (than e.g. if different resolutions were assigned to different probes without taking direction into account).

The one or more predetermined conditions, based on which the first region is determined, may comprise one or more of the following:
- one or more conditions relating to objects in the virtual environment (in which the light probe is generated); and/or
- one or more conditions relating to the light probe in one or more previous frames of the virtual environment (i.e. the light probe as generated for one or more previous frames of the content).

Considering conditions relating to objects in the virtual environment, the predetermined conditions may comprise one or more conditions relating to one or more objects in the virtual environment and/or one or more characteristics of the objects. Determining the first region may then comprise determining a region of the light probe facing an object of the one or more objects (i.e. a region of the light probe whose corresponding output viewing direction is facing the object). In this way, light information may be stored at a higher resolution for probe pixels facing the one or more objects, which may be more relevant for runtime lighting of the environment.

Determining whether a region of the light probe is facing an object in the virtual environment may be based on a threshold cone angle (i.e. beam angle) around the output viewing direction corresponding to the region. For example, an object within a cone angle of 5 (or 10, or 20) degrees from the output viewing direction may be determined as facing the corresponding light probe region. In some cases, the threshold cone angle may vary in dependence on characteristics of the object in question - for example, a larger threshold cone angle may be used for objects with rougher surfaces (which are thus more likely to scatter light such that it reaches the relevant region of the light probe).

The one or more objects may be selected based on their various characteristics, such as one or more of: brightness, luminosity, colour, surface roughness, shape, level of detail (LOD), or proximity to other objects. For example, the first region may be determined as the region of the probe facing an object having a brightness (e.g. as measured at the location of the light probe) above a predetermined threshold and/or a luminosity above a predetermined threshold - such as the Sun in the virtual environment.

Alternatively, or in addition, the first region may be determined as the region of the probe facing an object with a surface roughness (and/or frequency changes) above a predetermined threshold. In some cases, such objects may be more likely to scatter light and produce more complex lighting effects, and storing light information at a higher resolution in the region facing such objects can provide improved lighting effects.

Alternatively, or in addition, the first region may be determined as the region of the probe facing an object of a colour (e.g. red) and/or shape (e.g. polyhedron) within a predetermined list. For example, light reflecting of a red object may be more noticeable to the end-user than light reflecting of a white object.

Alternatively, or in addition, the first region may be determined as the region of the probe facing an object having a level of detail above a predetermined threshold and/or within a predetermined threshold distance of one or more other objects in the virtual environment (optionally having specific characteristics, e,g, similar to those described above). Similarly to objects with a high surface roughness, objects having a high LOD (e.g. lots of small geometry) or proximate to other objects may be more likely to scatter light and/or produce more complex lighting effects and it may be advantageous to store the corresponding lighting information at a higher resolution.

The various predetermined thresholds described herein may be absolute (i.e. predefined) or relative to other objects in the present virtual environment. For example, the one or more objects may comprise one or more objects with a LOD above a predefined level, and/or with the highest LOD amongst objects in the present virtual environment.

It will be appreciated that the above represent merely exemplary conditions relating to objects and their characteristics. Further, these conditions may be used in any appropriate combination. For example, the first region may be determined as the region of the probe facing an object having both a brightness and a LOD above predetermined thresholds. In some cases, one or more of the conditions may be evaluated jointly using a mathematical expression - for example, a polynomial function with weightings for various object characteristics that outputs an overall 'importance' score for different regions and/or pixels of the light probe. An appropriate importance scoring function may be empirically determined based on historical data relating to light probes and virtual environments.

It will also be appreciated that, in some cases, one or more of the objects may be pre-selected by a developer. The orientation of these pre-selected objects relative to the light probe may then by tracked at step 210 to determine whether a region of the light probe is facing any of the pre-selected objects.

Considering conditions relating to the light probe in one or more previous frames, it will be appreciated that a plurality of frames portraying the virtual environment are typically rendered for the displayed content (e.g. a video game) and that light probes may be generated for one or more of these frames. For example, light probes may be generated anew (e.g. light information may be collected anew for the probes) for each frame to reflect changes in the virtual environment over time (e.g. time of day or weather changes). Data relating to the light probe from previous frames (and according to the invention, which regions of the light probe were salient in previous frames) provides, according to the invention, an indicator of which regions of the probe are expected to be salient in the current frame. Using this data allows more accurately predicting the salient regions of the probe in the current frame so that light information can be stored at higher resolution for these regions.

It will be appreciated that data relating to the light probe for one or a plurality of previous frames are used. Data for a plurality of frames may be further processed as appropriate. For example, the data may be aggregated (e.g. averaged), and/or a recency factor may be applied to assign a higher weighting to more recent data (i.e. data from more recent frames).

In some cases, determining the first region may comprise determining a region of the light probe that had one or more characteristics meeting a predetermined condition in the one or more previous frames. Relevant characteristics of the light probe in the previous frame may, for example, include luminosity, and/or colour. For example, the first region may be determined as the region of the light probe that had a luminosity above a predetermined threshold in the previous frame and/or had a colour within a predetermined list (e.g. of various shades of red). Lighting effects provided by such regions of the light probe may be more noticeable to a user, and so improved lighting effect quality can be obtained by assuming that the characteristics of the regions in the previous frames will at least partially persist in the current frame and by storing light information for those regions at a higher resolution.

In some cases, determining the first region may comprise determining a region of the light probe that was used to light one or more objects in the virtual environment in the one or more previous frames at runtime of the rendered content. For example, it may be determined which regions of a light probe were closest to moving objects in the environment in a previous frame and were thus used to light the moving objects - based on this, it may be expected that the same (and/or adjacent) regions of the light probe are likely to be used in the current frame and higher resolution light information may be stored for those regions.

The first region may be determined in dependence on a degree to which a region was used to light objects in the virtual environment in the one or more previous frames. For example, the first region may be determined as the region that was most used to light objects in the one or more previous frames. The degree to which a region was used to light objects may be quantified in various appropriate ways. For instance, a counter may be provided for each region of the light probe (e.g. each pixel or each 2x2, 4x4 or 8x8 block of pixels) that is incremented each time the region is used to light an object in a frame. The fist region may then be determined based on the counters for each region - e.g. the first region may be determined as the region with the highest counter. In some cases, the degree to which a region was used to light objects may further include a recency weighting such that regions used to light objects in more recent frames are more likely to be selected for the first region - e.g., in a counter implementation, at each frame the current counter may be reduced by a predetermined factor (e.g. factor of 2) such that older instances of use of the region have a progressively smaller impact on the overall counter.

In some cases, the first region may be determined in dependence on a virtual camera position and/or orientation in the virtual environment in one or more previous frames. For example, the first region may be determined in dependence on whether a region of the probe was facing the virtual camera in previous frames. In this way, higher resolution light information may be stored for the light probe region that faced the virtual camera (and is likely to face the virtual camera in the current frame) and so its light information quality is more likely to be noticeable to the user.

In some cases, motion of an object in the virtual environment relative to the light probe may be predicted based on one or more previous frames of the virtual environment. For example, motion of an object between previous frames may be extrapolated to predict future motion of the object. The first region may then be determined based on the predicted motion of the object, and the one or more predetermined conditions (for determining the first object) may comprise a condition relating to the predicted motion of the object. For instance, the first region of the light probe may be determined as the region which the object is determined most likely to be closest to in the current frame (and so most likely to be used to light the object) based on the predicted motion of the object.

It will be appreciated that the first region may be determined based on conditions relating to both objects in the virtual environment and previous frames of the virtual environment. For example, the first region may be determined in dependence on whether a region is facing an object with particular characteristics and in dependence on whether the object was present in the previous frames. Objects which were not present in previous frames (or were present in fewer previous frames) may be prioritized for determining the first region as the user is more likely to pay attention to lighting effects associated with objects that are new to the environment. Alternatively, or in addition, the first region may be determined in dependence on whether a region is facing an object with particular characteristics and in dependence on whether the region was used to light an object in the virtual environment in previous frames.

In some cases, the first region may be determined in dependence on gaze information relating to one or more users of the content (i.e. rendered virtual environment). Such gaze information may for example be obtained using the HMD 120. This gaze information may comprise historical data relating to user gaze for the content. The first region may then be determined based on this historical user gaze data. For example, the first region may be determined as the region of the light probe facing a point on a display where the user gaze was on average directed at a corresponding point in the content (e.g. corresponding point of gameplay, such as a checkpoint, in a video game).

In some cases, the first region may be determined in dependence on historical data relating to the content. Observing historical trends in the content allows estimating which regions of the probe may be salient when the content is rendered in the future, and thus which regions should store higher resolution light information. For example, a plurality of previous instances of the rendered content may be analysed to determine the average position of moving objects in the virtual environment, and the first region may be determined as the region of the light probe that is nearest this determined average position. The historical data may relate to one or more users of the content. In some cases, content may first be displayed to a plurality of test users to collect the data relating to the content, based on which salient regions of the light probe may be estimated as described above.

A step 220 comprises collecting light information from the virtual environment. The light information relates to light passing through a location of the light probe in the virtual environment.

Collecting the light information may comprise a plurality of light collection operations for different regions of the probe. Each light collection operation may be implemented as a shading operation for a given probe region. A light collection operation for a probe region may comprise sampling incoming light from a plurality of directions from the virtual environment, and aggregating the incoming light into light information corresponding to the output viewing direction associated with the probe region. Each light collection operation may therefore correspond to collecting light for a different viewing direction from the light probe. The incoming light may, for example, be aggregated using cubemap convolution and the BRDF (Bidirectional Reflectance Distribution Function).

In existing arrangements, a separate light collection operation is performed for each probe pixel, and incoming light is sampled evenly from all possible incoming directions from the virtual environment (which may comprise hundreds or thousands of directions). It will be appreciated that these arrangements therefore have a high associated computational cost for generating the light probe.

In one or more examples of the present disclosure, collecting light information comprises importance sampling of the light information. Importance sampling may be applied to one or more of the light collection operations. For a given light collection operation, importance sampling may comprise aligning taken samples of incoming light along a specular lobe based on data relating to the corresponding surfaces of the virtual environment. This allows reducing the total number of samples that need to be taken in a light collection operation by prioritizing samples that will have the most impact on the region of the probe for which light is collected, thus reducing the computational cost of generating the light probe without significantly reducing its quality.

A step 230 comprises storing the light information collected at step 220 in the light probe. At step 230, the light information is stored at a higher resolution in the first region of the light probe than in the second region of the light probe. The light information may be stored in the light probe in any appropriate format. For example, the light information may be stored as spherical harmonics basis functions, such as L2 spherical harmonics.

By storing more detailed light information for more salient regions of the light probe in this way, the light probe can provide higher quality lighting effects at runtime without increasing (or in some cases actually reducing) the computation cost of generating the light probe.

As discussed above, collecting light information may comprise a plurality of light collection operations for different regions of the light probe. Storing the light information may comprise storing the result of light collection operations for the first region at a higher resolution than for light collection operations for the second region.

Storing the results of light collection operations at different resolutions for different regions of the probe may be implemented by varying the number of probe pixels each light collection operation can impact. For example, faces of the light probe (e.g. face 302-a) may be divided into regions of target light information resolution (e.g. with region 306-a being assigned a higher target light information resolution than the remainder of face 302-a) that define the number and arrangement (e.g. 2x2, 4x2, 2x4, etc.) of probe pixels that a light operation in a given region impacts. The result of each light collection operation may then be written to the number and arrangement of probe pixels in dependence on the target light information resolution for that region.

Each light operation may comprise a shading operation. In order to vary the number of probe pixels each light collection operation can impact, variable rate shading may be applied during the environment map creation (light gather) or probe filtering (light filter) phases of light probe construction.

Alternatively, or in addition, storing the results of light collection operations at different resolutions for different regions of the probe may be implemented by pre-setting the resolution of probe pixels in different regions of the probe prior to collecting the light information at step 220. For example, the probe pixels may be pre-set to a first resolution in the first region, and to a second resolution in the second region. Light information may then be collected at step 220 for each probe pixel (which will be of different size in different regions) and stored in each probe pixel at step 230.

Storing the result of light collection operations at different resolutions for different regions of the probe in effect allows varying the number of light collection operations that are performed for different regions of the light probe. In this way, more light collection operations may be performed for probe pixels in the first region of the light probe (which are determined to be more salient for lighting effects at runtime at step 210) than for probe pixels in the second region of the light probe.

The respective resolutions for storing light information in the first and second regions may be predetermined. For example, appropriate resolutions for storing light information for more and less salient regions may be empirically determined based on user feedback on rendered environments comprising light probes. In some cases, the resolutions may depend on the hardware (e.g. its static properties such as processing power, or dynamic properties such as current load) used to generate the light probe - for example, higher resolutions (for the first and/or the second region) may be used when more processing power is available.

Alternatively, or in addition, the respective resolutions for storing light information in the first and second regions may be determined based on similar criteria to those used for determining the first region. For example, the resolution of a region may be determined in dependence on one or more of: whether the region is facing a predefined object, the characteristics (e.g. brightness) of that object, and/or whether and/or to what degree the region was used to light an object in a previous frame. The resolution may be determined using an empirically determined function including variables for one or more of these parameters.

The resolution of the first and/or second region may be different in different directions. For example, different resolutions may be provided in the horizontal and vertical directions, for instance, the result of a light collection operation in a given region may be stored in a 1x2 or 2x1 grid of probe pixels.

In some cases, upscaling techniques may be applied to the light probe. Temporal and/or spatial upscaling techniques may be used. Various upscaling techniques may be used, such as FidelityFX Super Resolution (FSR), point upscaling, or bilinear upscaling.

Upscaling may be applied to the stored light information in the first and/or second region of the light probe to increase the resolution of the stored light information. Applying upscaling in this way allows increasing the resolution of the light information stored in the light probe, while being computationally cheaper than rendering the light probe at a higher resolution.

Upscaling may be applied to the first region of the light probe to further increase its resolution, thus obtaining yet higher resolution information for the most salient output viewing directions from the light probe.

Alternatively, or in addition, upscaling may be applied to the second region of the light probe to increase the resolution of light information in the second region. For example, upscaling may be applied to the light information stored in the second region to increase its resolution to that of the first region. This allows obtaining a light probe with uniform resolution at reduced computational costs, where the first region is prioritised and natively rendered at a higher resolution and the second region is only upscaled to the higher resolution (and so has a higher probability of artefacts).

Alternatively, or in addition, upscaling may be applied to the light probe as a whole to improve the resolution of the light probe more generally at reduced computational cost.

It will be appreciated that the method described above with reference to Figure 2 provides several advantages over existing arrangements.

In existing arrangements, a separate light collection operations is performed for each probe pixel, and the probe pixel resolution is constant across the faces of the light probe. This results in an inherent trade-off between the quality of the light information and the computational costs of generating the light probe, as increasing one parameter results in an increase to the other parameter.

In contrast, by varying the resolution at which light information is written to the light probe between different regions of the probe at step 230, the present approach allows prioritizing regions of the probe (and therefore output viewing directions) that are most important to lighting effects at runtime and storing more detailed light information for those regions. This allows improving the balance between lighting effect quality at runtime and the computational cost of generating the light probe. In particular, as discussed above, each probe pixel/region corresponds to an output viewing direction from the probe - thus, the present approach allows prioritizing the most important directions of light stored in the probe. For lighting effects, directionality of light is often of key importance, and the present approach allows ensuring that light information is stored at an appropriately high resolution for salient directions, while using a lower resolution for less relevant directions to save computational resources.

It will be appreciated that, alternatively or in addition, to determining a first 'higher resolution' region, step 210 may comprise determining a second 'lower resolution' region of the light probe. In other words, step 210 may comprise determining a second region of the light probe that is of lesser relevance to runtime lighting (e.g. a region facing objects in the virtual environment with a brightness below a predetermined threshold), and step 230 may comprise storing light information at a lower resolution in this second region to save computational resources. The same techniques described herein, e.g. applied in reverse, may be used to determine this second region.

It will also be appreciated that step 210 may comprise determining a plurality of regions of the probe (i.e. that the light probe 300 may be divided into more than two regions) and/or that light information may be stored in these regions at step 230 at more than two different resolutions. For example, the light probe 300 may be divided into a first region such as region 306-a (with an associated first resolution of stored light information), a second region such as region 306-b (with an associated second resolution of stored light information), and a third region such as face 302-c (with an associated third resolution of stored light information).

Of course, it will be appreciated that the techniques described herein can be also extended to the generation of a plurality of light probes in one or more virtual environments.

Referring back to Figure 2, in a summary embodiment of the present invention a method of generating a light probe in a virtual environment comprises the following steps.

A step 210 comprises determining a first region of the light probe based on one or more predetermined conditions, as described elsewhere herein.

A step 220 comprises collecting light information from the virtual environment, the light information relating to light passing through a location of the light probe in the virtual environment, as described elsewhere herein.

A step 230 comprises storing the light information in the light probe, where the light information is stored at a higher resolution in the first region of the light probe than in a, different, second region of the light probe, as described elsewhere herein.

It will be apparent to a person skilled in the art that variations in the above method corresponding to operation of the various embodiments of the method and/or apparatus as described and claimed herein are considered within the scope of the present disclosure, including but not limited to that:
- the step of collecting light information 220 comprises a plurality of light collection operations for different regions of the light probe, and the step of storing the light information 230 comprises storing the result of light collection operations for the first region at a higher resolution than for light collection operations for the second region, as described elsewhere herein;
   - in this case, optionally storing the result of a light collection operation for the first region at a higher resolution than for light collection operations for the second region comprises storing the result of each light collection operation for the first region in fewer pixels of the light probe than for light collection operations for the second region, as described elsewhere herein;
- the one or more predetermined conditions (used to determine the first region at step 210) comprise at least one condition relating to one or more objects in the virtual environment, as described elsewhere herein;
   - in this case, optionally the first region is determined in dependence on whether a region of the light probe is facing at least one object of the one or more objects, as described elsewhere herein;
   - in this case, optionally the first region is determined in dependence on one or more characteristics of the one or more objects, as described elsewhere herein;
      ▪ where, optionally the one or more characteristics of the objects comprise one or more selected from the list consisting of: brightness, surface roughness, shape, level of detail, or proximity to other objects, as described elsewhere herein;
- the one or more predetermined conditions (used to determine the first region at step 210) comprise at least one condition relating to the light probe in one or more previous frames of the virtual environment, as described elsewhere herein;
   - in this case, optionally the first region is determined in dependence on whether a region of the light probe had one or more characteristics meeting a predetermined condition in the one or more previous frames, as described elsewhere herein;
      ▪ where, optionally the one or more characteristics of the light probe comprise one or more selected from the list consisting of: luminosity, or colour, as described elsewhere herein;
   - in this case, optionally the first region is determined in dependence on whether a region of the light probe was used to light one or more objects in the virtual environment in the one or more previous frames, as described elsewhere herein;
      ▪ where, optionally the first region is determined in dependence on the degree to which the region was used to light one or more objects in the virtual environment in the one or more previous frames, as described elsewhere herein;
   - in this case, optionally the first region is determined in dependence on whether a region was facing a virtual camera in the virtual environment in the one or more previous frames, as described elsewhere herein;
- the method further comprises predicting motion, relative to the light probe, of an object in the virtual environment based on one or more previous frames of the virtual environment, as described elsewhere herein;
   - in this case, optionally the first region is determined in dependence on the predicted motion of the object in the virtual environment, as described elsewhere herein;
- the first region is determined in dependence on gaze information relating to one or more users of the content (corresponding to the virtual environment) , as described elsewhere herein;
- the first region is determined in dependence on historical data relating to the content, as described elsewhere herein;
- the first region and the second region comprise different regions of a face of the light probe, as described elsewhere herein;
- the first region and the second region comprise different faces of the light probe, as described elsewhere herein;
- the step of collecting light information 220 comprises importance sampling of the light information, as described elsewhere herein;
- the method further comprises applying upscaling to the stored light information in the first and/or second region of the light probe to increase the resolution of the stored light information, as described elsewhere herein; and
   - in this case, optionally, the upscaling is a temporal or spatial upscaling.

It will be appreciated that the above methods may be carried out on conventional hardware suitably adapted as applicable by software instruction or by the inclusion or substitution of dedicated hardware. Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

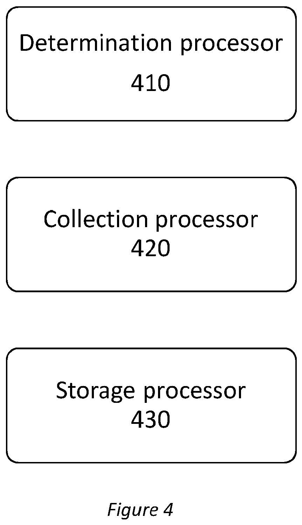

Referring to Figure 4, in a summary embodiment of the present invention, a system for generating a light probe in a virtual environment may comprise the following:
A determination processor 410 configured (for example by suitable software instruction) to determine a first region of the light probe based on one or more predetermined conditions, as described elsewhere herein.

A collection processor 420 configured (for example by suitable software instruction) to collect light information from the virtual environment, the light information relating to light passing through a location of the light probe in the virtual environment, as described elsewhere herein.

A storage processor 430 configured (for example by suitable software instruction) to store the light information in the light probe, wherein the light information is stored at a higher resolution in the first region of the light probe than in a, different, second region of the light probe, as described elsewhere herein.

These processors 410, 420, 430 may, for example, be implemented by the CPU 20 of the entertainment system 10. Of course, it will be appreciated that the functionality of these processors may be realised by any suitable number of processors located at any suitable number of devices and any suitable number of devices as appropriate rather than requiring a one-to-one mapping between the functionality and a device or processor.

The foregoing discussion discloses and describes merely exemplary embodiments of the present invention. As will be understood by those skilled in the art, the present invention may be embodied in other specific forms without departing from the essential characteristics thereof, which are defined by the appended claims.

## Claims

1. A method of generating a light probe in a virtual environment, the method comprising:
determining (210) a first region of the light probe based on one or more predetermined conditions; wherein the one or more predetermined conditions comprise at least one condition relating to one or more salient regions of the light probe in one or more previous frames of the virtual environment, compared with a, different, second region of the light probe; wherein a salient region of the light probe is a region important for lighting effects; and
collecting (220) light information from the virtual environment, the light information relating to light passing through a location of the light probe in the virtual environment; and
storing (230) the light information in the light probe, wherein the light information is stored at a higher resolution in the first region of the light probe than in the second region of the light probe.

2. The method of claim 1, wherein collecting light information comprises a plurality of light collection operations for different regions of the light probe, and wherein storing the light information comprises storing the result of light collection operations for the first region at a higher resolution than for light collection operations for the second region.

3. The method of claim 2, wherein storing the result of a light collection operation for the first region at a higher resolution than for light collection operations for the second region comprises storing the result of each light collection operation for the first region in fewer pixels of the light probe than for light collection operations for the second region.

4. The method of any preceding claim, wherein the one or more predetermined conditions comprise at least one condition relating to one or more objects in the virtual environment.

5. The method of claim 4, wherein the first region is determined in dependence on whether a region of the light probe is facing at least one object of the one or more objects.

6. The method of claim 4 or 5, wherein the first region is determined in dependence on one or more characteristics of the one or more objects, wherein the one or more characteristics of the objects comprise one or more selected from the list consisting of: brightness, surface roughness, shape, level of detail, or proximity to other objects.

7. The method of any preceding claim, wherein the first region is determined in dependence on whether, in the one or more previous frames, a region of the light probe had one or more of: a luminosity above a predetermined threshold, or a colour within a predetermined list.

8. The method of any preceding claim, wherein the first region is determined in dependence on whether: a region of the light probe was used to light one or more objects in the virtual environment in the one or more previous frames; and/or a region was facing a virtual camera in the virtual environment in the one or more previous frames.

9. The method of any preceding claim, further comprising predicting motion, relative to the light probe, of an object in the virtual environment based on one or more previous frames of the virtual environment; wherein the first region is determined in dependence on the predicted motion of the object in the virtual environment.

10. The method of any preceding claim, wherein the first region and the second region comprise different regions of a face of the light probe, or the first region and the second region comprise different faces of the light probe.

11. The method of any preceding claim, wherein collecting light information comprises importance sampling of the light information.

12. The method of any preceding claim, further comprising applying upscaling to the stored light information in the first and/or second region of the light probe to increase the resolution of the stored light information.

13. A computer program comprising computer executable instructions which, when the program is executed by a computer system, cause the computer system to perform the method of any one of the preceding claims.

14. A system for generating a light probe in a virtual environment, the system comprising:
a determination processor (410) configured to determine a first region of the light probe based on one or more predetermined conditions; wherein the one or more predetermined conditions comprise at least one condition relating to one or more salient regions of the light probe in one or more previous frames of the virtual environment, compared with a, different, second region of the light probe; wherein a salient region of the light probe is a region important for lighting effects; and
a collection processor (420) configured to collect light information from the virtual environment, the light information relating to light passing through a location of the light probe in the virtual environment; and
a storage processor (430) configured to store the light information in the light probe, wherein the light information is stored at a higher resolution in the first region of the light probe than the second region of the light probe.

## Patentansprüche

1. Verfahren zum Erzeugen einer Lichtsonde in einer virtuellen Umgebung, das Verfahren umfassend:
Bestimmen (210) eines ersten Bereichs der Lichtsonde basierend auf einer oder mehreren vorbestimmten Bedingungen; wobei die eine oder die mehreren vorbestimmten Bedingungen mindestens eine Bedingung umfassen, die sich auf einen oder mehrere hervorstechende Bereiche der Lichtsonde in einem oder mehreren vorherigen Frames der virtuellen Umgebung bezieht, verglichen mit einem unterschiedlichen, zweiten Bereich der Lichtsonde; wobei ein hervorstechender Bereich der Lichtsonde ein Bereich ist, der für Beleuchtungseffekte wichtig ist; und
Sammeln (220) von Lichtinformationen aus der virtuellen Umgebung, wobei sich die Lichtinformationen auf Licht beziehen, das durch einen Ort der Lichtsonde in der virtuellen Umgebung hindurchtritt; und
Speichern (230) der Lichtinformationen in der Lichtsonde, wobei die Lichtinformationen in dem ersten Bereich der Lichtsonde mit einer höheren Auflösung als in dem zweiten Bereich der Lichtsonde gespeichert werden.

2. Verfahren nach Anspruch 1, wobei das Sammeln von Lichtinformationen eine Vielzahl von Lichtsammeloperationen für unterschiedliche Bereiche der Lichtsonde umfasst, und wobei das Speichern der Lichtinformationen das Speichern des Ergebnisses von Lichtsammeloperationen für den ersten Bereich mit einer höheren Auflösung als für Lichtsammeloperationen für den zweiten Bereich umfasst.

3. Verfahren nach Anspruch 2, wobei das Speichern des Ergebnisses einer Lichtsammeloperation für den ersten Bereich mit einer höheren Auflösung als für Lichtsammeloperationen für den zweiten Bereich das Speichern des Ergebnisses jeder Lichtsammeloperation für den ersten Bereich in weniger Pixel der Lichtsonde als für Lichtsammeloperationen für den zweiten Bereich umfasst.

4. Verfahren nach einem der vorstehenden Ansprüche, wobei die eine oder die mehreren vorbestimmten Bedingungen mindestens eine Bedingung umfassen, die sich auf ein oder mehrere Objekte in der virtuellen Umgebung bezieht.

5. Verfahren nach Anspruch 4, wobei der erste Bereich in Abhängigkeit davon bestimmt wird, ob ein Bereich der Lichtsonde mindestens einem Objekt des einen oder der mehreren Objekte zugewandt ist.

6. Verfahren nach Anspruch 4 oder 5, wobei der erste Bereich in Abhängigkeit von einer oder mehreren Eigenschaften des einen oder der mehreren Objekte bestimmt wird, wobei die eine oder die mehreren Eigenschaften der Objekte eine oder mehrere umfassen, die aus der Liste ausgewählt sind, bestehend aus: Helligkeit, Oberflächenrauheit, Form, Detailgrad oder Nähe zu anderen Objekten.

7. Verfahren nach einem der vorstehenden Ansprüche, wobei der erste Bereich in Abhängigkeit davon bestimmt wird, ob, in dem einen oder den mehreren vorherigen Frames, ein Bereich der Lichtsonde eines oder mehrere aufwies von: einer Luminosität oberhalb eines vorbestimmten Schwellenwerts oder einer Farbe innerhalb einer vorbestimmten Liste.

8. Verfahren nach einem der vorstehenden Ansprüche, wobei der erste Bereich in Abhängigkeit davon bestimmt wird, ob: ein Bereich der Lichtsonde verwendet wurde, um ein oder mehrere Objekte in der virtuellen Umgebung in dem einen oder den mehreren vorherigen Frames zu beleuchten; und/oder ein Bereich in dem einen oder den mehreren vorherigen Frames einer virtuellen Kamera in der virtuellen Umgebung zugewandt war.

9. Verfahren nach einem der vorstehenden Ansprüche, ferner umfassend ein Vorhersagen einer Bewegung, relativ zu der Lichtsonde, eines Objekts in der virtuellen Umgebung basierend auf einem oder mehreren vorherigen Frames der virtuellen Umgebung; wobei der erste Bereich in Abhängigkeit von der vorhergesagten Bewegung des Objekts in der virtuellen Umgebung bestimmt wird.

10. Verfahren nach einem der vorstehenden Ansprüche, wobei der erste Bereich und der zweite Bereich unterschiedliche Bereiche einer Fläche der Lichtsonde umfassen, oder der erste Bereich und der zweite Bereich unterschiedliche Flächen der Lichtsonde umfassen.

11. Verfahren nach einem der vorstehenden Ansprüche, wobei das Sammeln von Lichtinformationen Wichtigkeitsabtastung der Lichtinformationen umfasst.

12. Verfahren nach einem der vorstehenden Ansprüche, ferner umfassend das Anwenden einer Hochskalierung auf die gespeicherten Lichtinformationen in dem ersten und/oder zweiten Bereich der Lichtsonde, um die Auflösung der gespeicherten Lichtinformationen zu erhöhen.

13. Computerprogramm, umfassend computerausführbare Anweisungen, die, wenn das Programm durch ein Computersystem ausgeführt werden, das Computersystem veranlassen, das Verfahren nach einem der vorstehenden Ansprüche durchzuführen.

14. System zum Erzeugen einer Lichtsonde in einer virtuellen Umgebung, das System umfassend:
einen Bestimmungsprozessor (410), der konfiguriert ist, um einen ersten Bereich der Lichtsonde basierend auf einer oder mehreren vorbestimmten Bedingungen zu bestimmen; wobei die eine oder die mehreren vorbestimmten Bedingungen mindestens eine Bedingung umfassen, die sich auf einen oder mehrere hervorstechende Bereiche der Lichtsonde in einem oder mehreren vorherigen Frames der virtuellen Umgebung bezieht, verglichen mit einem unterschiedlichen, zweiten Bereich der Lichtsonde; wobei ein hervorstechender Bereich der Lichtsonde ein Bereich ist, der für Beleuchtungseffekte wichtig ist; und
einen Sammlungsprozessor (420), der konfiguriert ist, um Lichtinformationen aus der virtuellen Umgebung zu sammeln, wobei sich die Lichtinformationen auf Licht beziehen, das durch einen Ort der Lichtsonde in der virtuellen Umgebung hindurchtritt; und
einen Speicherprozessor (430), der konfiguriert ist, um die Lichtinformationen in der Lichtsonde zu speichern, wobei die Lichtinformationen in dem ersten Bereich der Lichtsonde mit einer höheren Auflösung als in dem zweiten Bereich der Lichtsonde gespeichert werden.

## Revendications

1. Procédé de génération d'une sonde de lumière dans un environnement virtuel, le procédé comprenant :
la détermination (210) d'une première région de la sonde de lumière sur la base d'une ou de plusieurs conditions prédéterminées ; dans lequel la ou les conditions prédéterminées comprennent au moins une condition se rapportant à une ou plusieurs régions saillantes de la sonde de lumière dans une ou plusieurs trames précédentes de l'environnement virtuel, par rapport à une seconde région différente de la sonde de lumière ; dans lequel une région saillante de la sonde de lumière est une région importante pour des effets lumineux ; et
la collecte (220) d'informations de lumière à partir de l'environnement virtuel, les informations de lumière se rapportant à la lumière passant à travers un emplacement de la sonde de lumière dans l'environnement virtuel ; et
le stockage (230) des informations de lumière dans la sonde de lumière, dans lequel les informations de lumière sont stockées à une résolution plus élevée dans la première région de la sonde de lumière que dans la seconde région de la sonde de lumière.

2. Procédé selon la revendication 1, dans lequel la collecte d'informations de lumière comprend une pluralité d'opérations de collecte de lumière pour différentes régions de la sonde de lumière, et dans lequel le stockage des informations de lumière comprend le stockage du résultat d'opérations de collecte de lumière pour la première région à une résolution plus élevée que pour des opérations de collecte de lumière pour la seconde région.

3. Procédé selon la revendication 2, dans lequel le stockage du résultat d'une opération de collecte de lumière pour la première région à une résolution plus élevée que pour des opérations de collecte de lumière pour la seconde région comprend le stockage du résultat de chaque opération de collecte de lumière pour la première région dans moins de pixels de la sonde de lumière que pour des opérations de collecte de lumière pour la seconde région.

4. Procédé selon l'une quelconque revendication précédente, dans lequel la ou les conditions prédéterminées comprennent au moins une condition se rapportant à un ou plusieurs objets dans l'environnement virtuel.

5. Procédé selon la revendication 4, dans lequel la première région est déterminée selon qu'une région de la sonde de lumière fait face à au moins un objet parmi le ou les objets.

6. Procédé selon la revendication 4 ou 5, dans lequel la première région est déterminée en fonction d'une ou de plusieurs caractéristiques du ou des objets, dans lequel la ou les caractéristiques des objets comprennent une ou plusieurs caractéristiques choisies dans la liste constituée de : luminosité, rugosité de surface, forme, niveau de détail, ou proximité d'autres objets.

7. Procédé selon l'une quelconque revendication précédente, dans lequel la première région est déterminée selon que, dans la ou les trames précédentes, une région de la sonde de lumière présentait un ou plusieurs parmi : une luminosité supérieure à un seuil prédéterminé, ou une couleur dans une liste prédéterminée.

8. Procédé selon l'une quelconque revendication précédente, dans lequel la première région est déterminée selon que : une région de la sonde de lumière a été utilisée pour éclairer un ou plusieurs objets dans l'environnement virtuel dans la ou les trames précédentes ; et/ou une région faisait face à une caméra virtuelle dans l'environnement virtuel dans la ou les images précédentes.

9. Procédé selon l'une quelconque revendication précédente, comprenant en outre la prédiction de mouvement, par rapport à la sonde de lumière, d'un objet dans l'environnement virtuel sur la base d'une ou de plusieurs trames précédentes de l'environnement virtuel ; dans lequel la première région est déterminée en fonction du mouvement prédit de l'objet dans l'environnement virtuel.

10. Procédé selon l'une quelconque revendication précédente, dans lequel la première région et la seconde région comprennent différentes régions d'une face de la sonde de lumière, ou la première région et la seconde région comprennent différentes faces de la sonde de lumière.

11. Procédé selon l'une quelconque revendication précédente, dans lequel la collecte d'informations de lumière comprend un échantillonnage d'importance des informations de lumière.

12. Procédé selon l'une quelconque revendication précédente, comprenant en outre l'application d'une mise à l'échelle aux informations de lumière stockées dans la première et/ou la seconde région de la sonde de lumière pour augmenter la résolution des informations de lumière stockées.

13. Programme informatique comprenant des instructions exécutables par ordinateur qui, lorsque le programme est exécuté par un système informatique, amènent le système informatique à réaliser le procédé selon l'une quelconque des revendications précédentes.

14. Système permettant de générer une sonde de lumière dans un environnement virtuel, le système comprenant :
un processeur de détermination (410) configuré pour déterminer une première région de la sonde de lumière sur la base d'une ou de plusieurs conditions prédéterminées ; dans lequel la ou les conditions prédéterminées comprennent au moins une condition se rapportant à une ou plusieurs régions saillantes de la sonde de lumière dans une ou plusieurs trames précédentes de l'environnement virtuel, par rapport à une seconde région différente de la sonde de lumière ; dans lequel une région saillante de la sonde de lumière est une région importante pour des effets lumineux ; et
un processeur de collecte (420) configuré pour collecter des informations de lumière à partir de l'environnement virtuel, les informations de lumière se rapportant à la lumière passant à travers un emplacement de la sonde de lumière dans l'environnement virtuel ; et
un processeur de stockage (430) configuré pour stocker les informations de lumière dans la sonde de lumière, dans lequel les informations de lumière sont stockées à une résolution plus élevée dans la première région de la sonde de lumière que dans la seconde région de la sonde de lumière.
